# EUROPEAN PATENT APPLICATION

(11) **EP 4 733 062 A1**
(43) Date of publication of application: **29.04.2026**
(21) Application number: 24208987.8
(22) Date of filing: 25.10.2024
(51) Int. Cl.: B32B 23/08, B32B 27/08, B32B 27/10, B32B 27/36, B65D 65/40, B65D 65/46

(54) **MULTILAYER FILM, METHOD OF FABRICATING A MULTILAYER FILM, AND USE OF A MULTILAYER FILM**

(71) Applicant: Superseven GmbH, 21465 Wentorf (DE)
(72) Inventor: Seevers, Sven, 21465 Reinbek (DE); Seevers, Katja, 21465 Reinbek (DE)
(74) Representative: Zimmermann & Partner Patentanwälte mbB

(57) **Abstract**

A multilayer film, suitable for packaging of pasty and liquid foodstuffs and/or consumable goods having a water content of 10% w/v or more, the multilayer film comprising a first film being a cellulose-based film; a second film being a thermoplastic and compostable polymer film; wherein the first film and the second film are thermally bonded.

## Description

### TECHNICAL FIELD

Embodiments of the present invention relate to a compostable multilayer film, methods of producing the multilayer film, and a use of the multilayer film, particularly for packaging consumer goods such as foodstuffs, personal care products, and/or cosmetic products. Embodiments of the present invention are particular suitable for packaging of pasty and/or liquid goods having a water content of 10% w/v or more.

### BACKGROUND

Liquid or water-containing goods, such as foodstuffs, personal care products, and/or cosmetic products are often provided as single-use portions, e.g. in the form of pouches or sachets. Packaging for such goods often is made of flexible multilayer films. Such multilayer films often are chosen according to specific requirements, such as consumer health and safety, physical protection of the packaged good, barrier properties of the film, e.g. to prevent an ingress of oxygen and/or an egress of water, and compatibility with a packaging process.

To comply with such requirements, conventional packaging often utilizes films having polyolefin layers, which are often combined with barrier layers, such as aluminum and (poly-)vinyl alcohols. These conventional films are often non-recyclable and thus may have an undesirable environmental impact. It is therefore desirable to provide an alternative film composition suitable for packaging which has an improved environmental footprint.

Recent advances have led to packaging materials based on multilayer films that consist of compostable components. Compostable multilayer films often include two or more film layers that are joined by a compostable adhesive, such as a polyurethane- and/or polyisocyanate-based adhesive. Such compostable multilayer films may only have limited usability for water-based goods, since even limited water vapor diffusion may, over time, result in a delamination of the multilayer film.

In view of the above, it is beneficial to provide an improved compostable multilayer film suitable for packaging water-containing goods. The embodiments described herein solve the above-stated problem at least in part.

### SUMMARY

The invention is set out in the appended set of claims.

According to a first aspect, a multilayer film is described. The multilayer film is suitable for packaging of pasty and liquid foodstuffs and/or consumable goods having a water content of 10% w/v or more. The multilayer film includes a first film being a cellulose-based film, and a second film being a thermoplastic and compostable polymer film. The first film and the second film are thermally bonded.

According to a second aspect, a method of fabricating a multilayer film according to embodiments described herein is described. The method includes providing a first film, the first film being a cellulose-based film, and providing a second film, the second film being a thermoplastic and compostable polymer film. The method includes heating a surface of the first film and/or the second film past a glass transition temperature and/or melting point of the film, and joining the first film and the second film. The joining includes pressing the first film against the second film.

According to a third aspect, a use of a multilayer film according to embodiments described herein in a packaging product is described. The use includes forming a container from the multilayer film so that the second film faces the inside of the container, filling the container with a good, and sealing the container.

According to an aspect, the multilayer film according to embodiments includes at least two layers formed from films, such as a cellulose-based film and a thermoplastic and compostable film. In the context of this disclosure, these layers may be referred to as films, film layers, or layers. The films in the multilayer film are thermally bonded. Accordingly, the multilayer film may be referred to as a laminate. The multilayer film according to embodiment differs from a multilayer film in which two or more layers are formed without a thermal bonding step, e.g. by coextrusion. The multilayer film according to embodiments differs from a multilayer film in which two or more layers are bonded with an adhesive in an adhesive-based bonding process not utilizing thermal bonding. In particular, when joining the first film and the second film, an adhesion between the first film and the second film may be induced and/or effected by applying heat, pressure, or a combination thereof. According to embodiments, a process for manufacturing the multilayer film may include a lamination step to activate an adhesive through heat and/or pressure. According to yet further embodiments, the multilayer film may be devoid of an adhesive, i.e. an adhesion may be induced by applying heat, pressure and/or a combination thereof to the first film and the second film, and the adhesion between the first film and the second film may be based on an interaction between a material and/or coating of the first film and a material and/or coating of the second film.

According to an aspect, the one or more, or even all of the films comprised in the multilayer film according to embodiments are compostable. In particular, a cellulose-based film, a paper-based film and/or a thermoplastic polymer film according to embodiments may be compostable. Compostable, in the context of this disclosure, may be understood as a component being suitable for industrial composting or even home composting, e.g. according to one of the standards EN 13432, AS 5810 and/or NF T51-800:2015 known at the time of filing this disclosure. Furthermore, according to some embodiments, compostable may be understood as biodegradable, e.g. through action of aerobic or anaerobic digestion, or other biological processes.

### BRIEF DESCRIPTION OF THE DRAWINGS

So that the manner in which the above recited features can be understood in detail, a more particular description, briefly summarized above, may be had by reference to embodiments. The accompanying drawings relate to embodiments and are described in the following:
- Fig. 1: schematically shows a multilayer film according to embodiments;
- Fig. 2: schematically shows a multilayer film according to embodiments;
- Fig. 3: schematically shows a thermoplastic and compostable polymer film according to embodiments;
- Fig. 4: schematically shows a cellulose-based film according to embodiments;
- Fig. 5: schematically shows a manufacturing process of a multilayer film according to embodiments;
- Fig. 6A: schematically shows a packaging product according to embodiments in a plan view; and
- Fig. 6B: schematically shows the packaging product according to embodiments in a cutaway side view.

### DETAILED DESCRIPTION OF EMBODIMENTS

Reference will now be made in detail to the various embodiments, one or more examples of which are illustrated in the figures. Within the following description of the drawings, the same reference numbers refer to same components. Generally, only the differences with respect to individual embodiments are described. Each example is provided by way of explanation and is not meant as a limitation. Further, features illustrated or described as part of one embodiment can be used on or in conjunction with other embodiments to yield yet a further embodiment. It is intended that the description includes such modifications and variations.

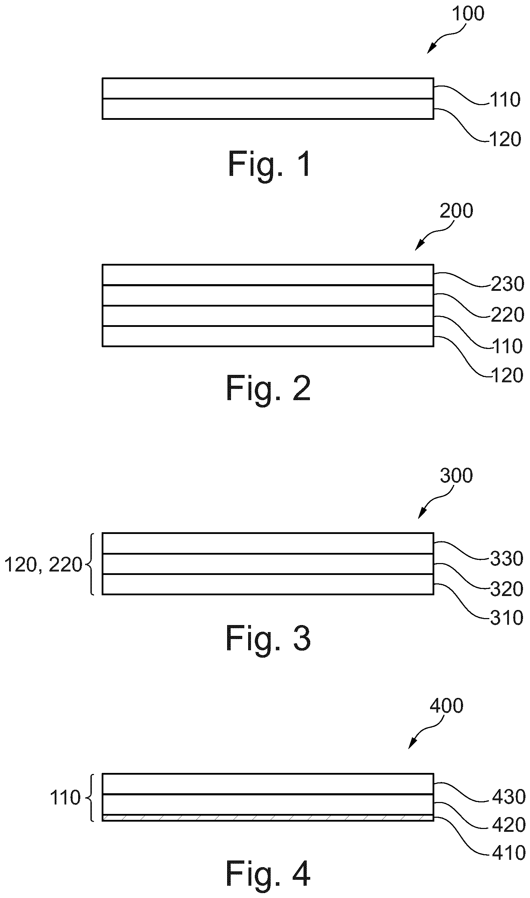

Fig. 1 shows a multilayer film 100 according to embodiments. The film 100 includes a first film 110. The first film 110 may be a layer of the multilayer film 100. The first film 110 is a cellulose-based film, particularly a regenerated cellulose film. According to embodiments, the first film 110 may include one or more coatings on one or both surfaces of the first film 110. The first film 110 may comprise regenerated cellulose as a main component. Embodiments of the first film 110 will be described in further detail with reference to Fig. 4. The first film 110 may be compostable. According to embodiments, the first film 110 may be manufactured from solubilized cellulose, e.g. according to known processes, such as a viscose process or a lyocell process. In preferred embodiments, the cellulose-based film may be manufactured and/or manufacturable from renewable resources.

The multilayer film 100 further includes a second film 120. The second film 120 may be a layer of the multilayer film 100. The second film 120 is a polymer film. The second film 120 is compostable. The second film is thermoplastic. The second film 120 may include one or more compostable thermoplastic polymers as a main component. Thermoplastic may be understood as the second film 120 being, at least in part, thermosoftening, formable when heated and/or even meltable. In some embodiments, the second film 120 may be a monofilm comprising a polyester, such as polybutylene succinat (PBS) or a polyhydroxyalkanoate (PHA) as a main component. For example, the second film 120 may be a PBS or a PHA film. In some embodiments, the second film 120 may comprise further thermoplastic, compostable polymers, such as polybutylene adipate terephthalate (PBAT), polylactic acid (PLA) and/or blends thereof. In some embodiments, the second film 120 may be a multilayer film, such as a multilayer film comprising layers of different compositions comprising PBAT, PLA, and PBS; PHA, PLA and PBS; and/or blends thereof. In some embodiments, the second film 120 may include a polyhydroxyalkanoate-type polymer, such as a monofilm of the polyhydroxyalkanoate-type polymer. For example, the second film 120 may include polyhydroxybutyrate (PHB) or copolymers thereof, such as poly(3-hydroxybutyrate-co-3-hydroxyvalerate) (PHBV). Embodiments of a second film 120 will be described in further detail with reference to Fig. 3. According to embodiments, the second film may be a sealing film, particularly a film showing bonding properties in a thermobonding and/or thermosealing process.

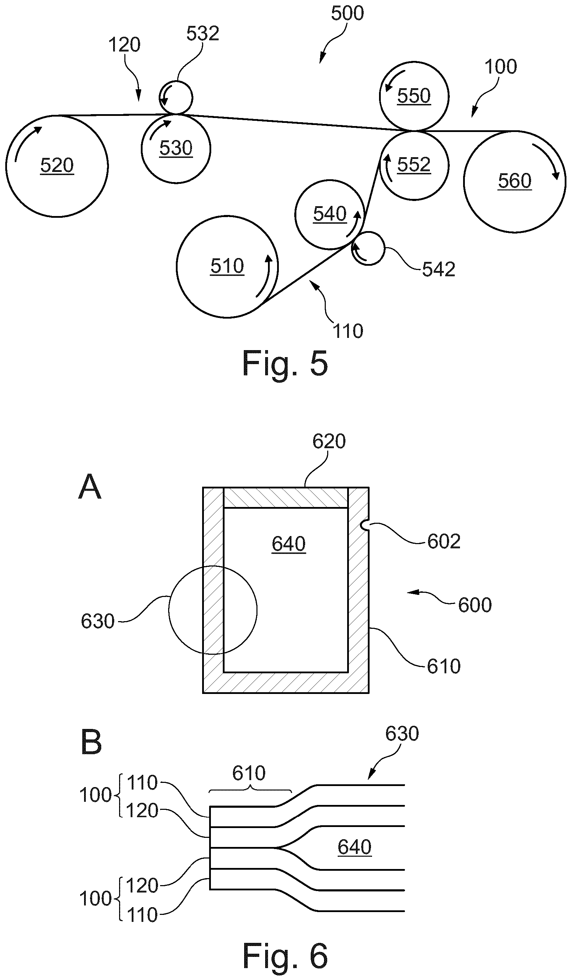

The first film 110 and the second film 120 are thermally bonded. A thermal bonding process according to embodiments suitable for generating the multilayer film 100 will be explained in further detail with reference to Fig. 5. In some embodiments, e.g. as shown in Fig. 1, the first film 110 and the second film 120 may be bonded without an adhesive layer in-between the first film 110 and the second film 120. In particular, the multilayer film 100 may be devoid of an adhesive layer, particularly an adhesive layer comprising e.g. a polyurethane- and/or polyisocyanate-based adhesive. It should be noted that, in some embodiments, thermal bonding may result in the formation of an interface layer, in which e.g. components of the first film 110 and the second film 120 may weld, fuse, blend and/or merge, however, such an interface layer is generally not understood as an adhesive layer.

In some embodiments, the first film 110 and the second film 120 may be thermally bonded and/or thermobonded by providing an adhesive in-between the first film 110 and the second film 120. The adhesive may be suitable for use in a thermal bonding process. In particular, the adhesive may be activatable through heat and/or pressure. The adhesive may be compostable. The adhesive may promote and/or cause an adhesion between the first layer 110, and/or the second layer 120 in the multilayer film. The adhesive may be a hot-melt adhesive. The adhesive may be a solvent-free adhesive. For example, the adhesive may be applied in a solvent-free state, or the adhesive may be applied, e.g. as a coating, to the first film 110 and/or the second film 120 before the thermal bonding so that a solvent can dissipate and/or evaporate before a thermal bonding step. In some embodiments, the adhesive may be applied as a coating to the first film 110 and/or the second film 120 before the multilayer film 100 is thermally bonded. In the multilayer film 100, the adhesive may form an adhesive layer in-between the first film 110 and the second film 120 (not shown). Aspects of the adhesive layer are explained in further detail with reference to Fig. 5.

According to embodiments, the multilayer film 100 may be a thermobonded laminate.

Beneficially, in some embodiments, thermal bonding may result in a multilayer film 100 being visually homogeneous and/or having better transparency, e.g. compared to multilayer films bonded with a solvent-based and/or solvent-containing adhesive. Beneficially, thermal bonding may improve the properties of the multilayer film 100 when used for packaging water-containing goods. In particular, the multilayer film 100 may be more stable compared to a multilayer film utilizing a solvent-based adhesive for bonding the first layer 110 and the second layer 120.

The first film 110 may have a thickness in a range between 10 µm and 30 µm. The thickness of the first film 110 may be a thickness before processing of the first film 110, i.e. before applying heat and/or pressure to the film. The thickness of the first film 110 may be a thickness of the first film 110 within the multilayer film. The thickness of the first film 110 may include additional coatings, such as the coatings described with reference to Fig. 4.

The second film 120 may have a thickness in a range between 15 µm and 50 µm. The thickness of the second film 120 may be a thickness before processing of the second film 120, i.e. before applying heat and/or pressure to the film. The thickness of the second film 120 may be a thickness of the second film 120 within the multilayer film.

In a packaging product, the first film 110 may face the outside of the packaging product, and the second film 120 may face the inside of the packaging product and/or be in contact with the packaged good.

Referring now to Fig. 2, a multilayer film 200 according to embodiments is described. The multilayer film 200 includes a first film 110 and a second film 120, e.g. as described with reference to Fig. 1.

In some embodiments, as shown in Fig. 2, the multilayer film 200 may include a third film 220. The third film 220 may be optional. The third film 220 is a thermoplastic and compostable polymer film. The third film is thermally bonded to the first film 110 on a side of the first film 110 opposite the second film 120. The third film 220 may correspond to a second film 120 according to embodiments described herein. The third film 220 may be similar or identical to the second film 120, or correspond to a different second film 120 according to embodiments described herein. For example, in some embodiments of the multilayer film 200, the second film 120 and the third film 220 may be identical, similar, or even different monofilms or multilayer films, while in other embodiments, a first one of the second film 120 and the third film 220 may be a monofilm, while the other one of the second film 120 and the third film 220 may be a multilayer film.

In some embodiments, as shown in Fig. 2, the multilayer film 200 may include a fourth film 230. The fourth film 230 may be optional. The fourth film 230 may be thermally bonded to the first film 110 or the third film 220 on a side of the first film 110 opposite the second film 120 or, as shown in Fig. 2, a side of the third film 220 opposite the second film 120.

The fourth film 230 may be a cellulose-based film, such as and/or similar to the first film 110. For example, the fourth film 230 may be a printed or printable film. For example, the fourth film 230 may be a cellulose-based film having additional and/or even different barrier properties than the first film 110, the second film 120, and/or the optional third film 220. Beneficially, the fourth film 230 may improve the mechanical, haptic and/or barrier properties of the multilayer film 200.

In some embodiments, the fourth film 230 may be a paper-based film. The paper-based film may be a paper film, such as an uncoated brown or white paper film, having one or two machine-smooth surfaces. The paper-based film may be printable and/or printed. The paper-based film may improve the haptic properties of a product made from the multilayer film 200, i.e. the outside of the product. The paper-based film may provide additional mechanical support, such as improved toughness, scratch resistance and/or tensile strength. The paper-based film may have a thickness of about 40 µm to about 70 µm, such as about 40 µm, 50 µm, 60 µm, or 70 µm. A paper-based film may differ from a cellulose-based film in that a paper-based film may be formed primarily from cellulose fibers, e.g. as obtained from a pulp based process.

According to embodiments, the multilayer film 200 may be manufactured from the films 110, 120, 220, 230 in a single thermal bonding step, or a series of thermal bonding steps. For example, the layers of the multilayer film may be formed by combining three or four films through thermal bonding, or by adding one or two additional films, such as the third film 220 and/or the fourth film 230, to the multilayer film 100 through thermal bonding.

Referring now to Fig. 3, a film 300 being a thermoplastic and compostable polymer film is described. According to embodiments, the film 300 may be the second film 120 shown in Fig. 1 and Fig. 2, or the second film 120 and/or the third film 220 shown in Fig. 2.

According to embodiments, the film 300 may include an inner layer 320. In the embodiment, the inner layer 320 is a layer comprising PBAT as a main component, such as a PBAT layer or a PBAT-based layer. According to embodiments, the inner layer 320 may constitute between 30% and 50% (w/w) of the film 300, such as about 40%. The remainder of the film 300 may be comprised of or include further layers, such as the outer layers 310, 330. In a film 300 in which one of the outer layers 310, 330 are omitted, the percentage of inner layer 320 portion of the film 300 may increase accordingly, and the inner layer 320 may be outside-facing.

According to embodiments, additionally, or alternatively, the second film 120 described with reference to Fig. 1, and/or the central layer 320 described with reference to Fig. 3, may be and/or comprise, particularly as a main constituent, PHA and/or a polyhydroxyalkanoate-type polymer. In particular, the polyhydroxyalkanoate-type polymer may comprise and/or be based on a polymer of polyhydroxybutyrate (PHB), such as a PHB-based copolymer, such as poly(3-hydroxybutyrate-co-3-hydroxyvalerate) (PHBV).

The film 300 further includes the outer layers 310, 330. As shown in Fig. 3, the outer layers 310, 330 may be in direct contact with the central layer 320, particularly fused and/or bonded to the central layer 320. The outer layers 310, 330 may include and/or be formed of PBS and PLA. The PBS and the PLA may be provided as a blend, such as a blend comprising PBS and PLA in a ratio of between 1:1 (w/w) and 6:1 (w/w), such as a ratio of about 5:1 (w/w). In some embodiments, the PBS and PLA may be crosslinked. In some embodiments, the PBS and PLA may be modified through plasticization, reactive blending, reactive compatibilization, or copolymerization.

In some embodiments, the film 300 may be a coextruded film, such as a film obtained by coextruding the central layer 320 and the outer layers 310, 330.

In some embodiments, one of the outer layers 310, 330 may be omitted, e.g. the film 300 may be a film comprising e.g. the PBS/PLA layer 310 and the PBAT or PHA layer 320.

According to embodiments, a glass transition point and/or a melting point of the outer layers 310, 330 may be lower than the glass transition point and/or melting point of the central layer 320. This may beneficially allow the central layer 320 to function as a support layer during thermal bonding, e.g. with a cellulose-based film such as the first film 110, while one or both of the outer layers 310, 330 are softened due to heating for thermal bonding.

Referring now to Fig. 4, a film 400 being a cellulose-based film according to embodiments is described. According to embodiments, the film 400 may be the first film 110 shown in Fig. 1 and Fig. 2, or the first film 110 and/or the fourth film 230 shown in Fig. 2.

The film 400 includes a cellulose-based film 420, such as a film comprising regenerated cellulose, e.g. as described herein with reference to the first film 110 shown in Fig. 1 and Fig. 2. The cellulose-based film 420 may be a main component of the film 400. The cellulose-based film 420 may be a clear and/or transparent film. The cellulose-based film may include a plasticizer, such as glycerin.

According to embodiments, as shown in Fig. 4, the film 400 may include a first coating 410. The first coating 410 may be a metal coating, such as a metallization. In particular, the first coating may be an aluminum metal coating, such as an aluminum metallization. The first coating 410 may be applied to the cellulose-based film 420 according to methods known in the art, such as, but not limited to, metal vapor deposition. The first coating 410 may beneficially improve the barrier properties of the film 400, particularly moisture barrier properties, gas barrier properties, aroma barrier properties, and/or light barrier properties.

According to embodiments, as shown in Fig. 4, the film 400 may include a second coating 430. The second coating 430 may comprise polylactic acid (PLA) and/or polyvinylidene chloride (PVDC). In some embodiments, the second coating may include a blend of PLA and PVDC. In some embodiments, the second coating 430 may comprise separate coatings of PLA and PVDC. The second coating 430 may beneficially improve the barrier properties of the film 400, particularly moisture barrier properties, gas barrier properties, and/or aroma barrier properties. The second coating 430 may beneficially improve a heat-sealability of the film 400, which may improve thermal bonding in a multilayer film such as the multilayer films 100, 200, and/or the manufacturing of containers from the multilayer films 100, 200 through heat-sealing.

According to embodiments, additionally, or alternatively, the second coating 430 may be a barrier layer comprising polyvinyl alcohol, PVA, a silicone-based polymer, particularly polysiloxane, and/or an inorganic glass or ceramic, particularly in the form of micro- or nanoparticles. For example, the second coating 430 may be a hybrid material such as an organically modified ceramic, such as ORMOCER^{®}, or bioORMOCER^{®} known at the time of filing this disclosure.

In some embodiments, the first coating 410 and/or the second coating 430 may be optional. In some embodiments, differently than shown in Fig. 4, both a first coating 410 and a second coating 430 may be applied on the same side of the film 420. For example, a second coating 430 may be applied on-top of the first coating 410, the first coating being applied on the film 420. In some embodiments, the film 400 may comprise a second coating 430 applied on-top of a first coating 410 on both sides of the film 420. In some embodiments, the film 400 may comprise a second coating 430 applied on-top of a first coating 410 on a first side of the film 420, and comprise a second coating 430 on an opposite side of the film 420 applied to the film 420.

According to embodiments, the second coating 430 may include an adhesive, such as an adhesive layer described with reference to Fig. 1, such as a hot melt adhesive layer. Additionally, or alternatively, an adhesive coating may be provided in addition to the first coating 410 and/or the second coating 430. Additionally, or alternatively, in some embodiments, a second coating 430 providing barrier properties may further provide adhesive properties in a thermal bonding step. Accordingly, particularly in case the second coating 430 provides adhesive properties, a (further) adhesive coating may be optional.

It should be noted that the coatings 410, 430 shown in Fig. 4 are not drawn to scale. Accordingly, the coatings 410, 430 may be thin compared to the thickness of the cellulose-based film 420, such as equal or less than 5%, equal or less than 2%, or even equal or less than 1% of the thickness of the cellulose-based film 410. Beneficially, the coatings, despite potentially comprising non-biodegradable components, typically do not interfere with a composting process.

Referring now to Fig. 5, a method of fabricating a multilayer film according to embodiments described herein is described. The fabricated multilayer film may be the multilayer film 100 or the multilayer film 200 described with reference to Fig. 1 and/or Fig. 2.

A first film 110 being a cellulose-based film according to embodiments described herein is provided on a roll 510. The first film 110 is unrolled, as a web and/or sheet, from the roll 510 and guided past a pair of rollers 540, 542.

In some embodiments, providing the first film 110 may include applying an adhesive coating onto the first film 110, e.g. after unrolling the first film, or even before forming the roll 510. Applying the adhesive coating may include directly applying a hot-melt adhesive, e.g. as a melted adhesive. Applying the adhesive may include applying a solubilized adhesive and allowing the solvent to dissipate, evaporate and/or dry. Applying the adhesive may including applying a dispersion of the adhesive onto the first film 110, and allowing the liquid phase to dissipate, evaporate and/or dry. In some embodiments, the adhesive coating may be bonded with the cellulose-based film. It should be noted that the adhesive coating may not necessarily have adhesive properties until the adhesive is activated, e.g. through heat and/or pressure.

According to embodiments, the roller 540 and optionally the roller 542 may be heated. Accordingly, when travelling past the rollers 540, 542, a surface, or both surfaces of the first film 110 may be heated. For example, in case the first film 110 includes an adhesive coating, the adhesive coating may be heated. For example, in case the first film 110 includes a hot-melt adhesive coating, the hot-melt adhesive coating may be activated through heating.

A second film 120 being a thermoplastic and compostable polymer film according to embodiments described herein is provided on a roll 520. The second film 120 is unrolled, as a web and/or sheet, from the roll 520 and guided past a pair of rollers 530, 532.

In some embodiments, an adhesive coating may be provided for the second film 120, e.g. as described herein for the first film 110.

The roller 530 and optionally the roller 532 may be heated. Accordingly, when travelling past the rollers 530, 532, a surface, or even both surfaces of the second film 120 may be heated. In particular, when traveling past the roller 530, the surface of the second film 120 to be bonded with the first film 110 may be heated past a glass transition temperature and/or melting point of the second film, particularly an outer layer of the second film, such as an outer layer 310, 330 of the second film 120 according to embodiments, or an adhesive coating of the second film 120. Likewise, in case of the second film 120 being a monofilm, heating a surface of the second film 120 past a glass transition temperature and/or melting point of the second film 120 may include only heating a surface portion, e.g. a limited depth, of the second film 120 past a glass transition temperature and/or melting point of the second film, while e.g. a remainder portion of the second film remains below a glass transition temperature and/or melting point of the second film 120.

After the optional heating, the first film 110 and the second film 120 are further transported to the set of calender rolls 550, 552 and fed through the calender rolls 550, 552. When traveling past and/or through the calender rolls, the first film 110 and the second film 120 are pressed against one another. In some embodiments, the set of calender rolls 550, 552 may be heated. Pressing the first film 110 against the second film 120, particularly pressing a heated surface of the first film 110 against the heated surface of the second film 120, causes the first film 110 and the second film 120 to be thermally bonded, resulting in the multilayer film 100 in which the first film 110 and the second film 120 are joined, e.g. as shown in Fig. 1.

In some embodiments, the first film 110 and/or the second film 120 may be heated, additionally or even alternatively to being heated by the rollers 530, 540, by other sources, such as IR radiation sources, a stream of heated air, or even flame heating.

In some embodiments, the method 500 may include a cooling step, e.g. after the joining the first film 110 and the second film 120 to form the multilayer film 100.

In the embodiment shown in Fig. 5, the method 500 may include rolling the (cooled) multilayer film 100 onto a roll 560, e.g. for further transport and/or processing in a different machine. In some embodiments, the multilayer film 100 may be directly utilized in a packaging process, e.g. according to embodiments described herein.

According to embodiments, the method 500 may be performed in a machine, such as a film bonding machine shown in Fig. 5. According to embodiments, different machines and/or even different processes may be employed to form the multilayer film 100 according to embodiments herein. For example, in some embodiments, rather than utilizing a web-based and/or continuous process, the method may include bonding sheets of the first film 110 and the second film 120.

According to embodiments, a multilayer film 100, 200 according to embodiments described herein may be used in a packaging product. This disclosure applies to the use of the multilayer film 100, 200, a container, the packaging product, and/or a good being packaged in the packaging product.

According to embodiments, the packaging product may include a container, particularly a container suitable for holding, storing, and/or distributing a packaged good.

The packaged good may be a wet good, such as a paste or a liquid. The packaged good may have a water content of 10 % (w/v) or more, 20 % (w/v) or more, 30 % (w/v) or more, or even 50 % (w/v) or more. The packaged good may be a water-containing or even water-based liquid, paste, emulsion, gel, solution, suspension or other type of substance and/or mixture. The packaged good may be a consumer good. For example, the packaged good may be a consumable, such as a pharmaceutical product, a nutritional supplement, a foodstuff, such as e.g. a condiment, seasoning, sauce, jelly, paste, ingredient or the like. For example, the packaged good may be a hygiene product, cosmetic product and/or personal care product, such as a cream, paste, soap, shampoo, perfume, wet towel or the like.

According to embodiments, the multilayer film 100, 200 according to embodiments described herein may be used for forming and/or manufacturing the container. The container may be formed so that the second film 120 faces the inside of the container, particularly so that, in a packaged product, the second film 120 faces the packaged good. Forming the container may include providing one or more multilayer films 100, 200, and sealing, particularly heat-sealing, the multilayer film(s) 100, 200 so that the desired container shape is obtained. Beneficially, the multilayer film 100, 200 may be compatible with known heat-sealing processes. Accordingly, forming the container may be performed according to processes known in the art.

The container may be filled with a good, and sealed, e.g. before or after filling the container with the good, particularly so that the good is sealed within the container. Sealing may include heat sealing the container. Filling and/or sealing the container may be performed according to processes known in the art.

According to embodiments, the container may be a sachet, packet, bag and/or pouch, or any other shape known in the art at the time of filing this disclosure. According to embodiments, the container, particularly the packaging product comprising the packaged good, may be a single-use item. For example, and not limited thereto, the container may include the packaged good in a quantity intended for one-time consumption, such as a single use and/or serving. Beneficially, the packaging product according to embodiments may replace existing, non-compostable single-use items and/or packaging products, which may beneficially reduce the negative environmental impact of such items.

An exemplary packaging product 600 according to embodiments is shown in Fig. 6A and Fig. 6B. The packaging product 600 may be a sachet. Fig. 6A shows a schematic plan view of the packaging product comprising a good 640. Fig. 6B shows a cutaway side view of a heat-sealed portion 630 of the packaging product 600. To manufacture the packaging product 600, two multilayer films 100 are positioned so that the side of the multilayer film 100 comprising the thermoplastic polymer containing second film 120 face one another. The multilayer films 100 are heat sealed along a first seal 610 to form a container. The container is filled with the good 640 and heat sealed along the second seal 620. As shown in Fig. 6B, heat sealing causes the thermoplastic polymer films 120 to bond to one another, resulting in a durable seal. Use of the packaging product 600 e.g. by a consumer may include tearing open the packaging product 600 at the notch 602 to release the good 640, and disposing the packaging product 600 after the good 640 has been consumed. Further use of the packaging product 600 may include composting the packaging product 600.

According to embodiments, a packaging product, such as the packaging product 600 is described. The packaging product may be formed of one or more multilayer films. In particular, the packaging product may include at least one multilayer film according to embodiments described herein. In particular, the packaging product may include a multilayer film comprising a first film being a cellulose-based film and a second film being a thermoplastic and compostable polymer film. The first film and the second film are thermally bonded. In addition to being thermally bonded, particularly across a main surface of the multilayer film, the packaging product may be sealed, particularly heat-sealed.

While the foregoing is directed to some embodiments, other and further embodiments may be devised without departing from the basic scope, and the scope is determined by the claims that follow.

## Claims

1. A multilayer film, suitable for packaging of pasty and liquid foodstuffs and/or consumable goods having a water content of 10% w/v or more, the multilayer film comprising:
a first film being a cellulose-based film;
a second film being a thermoplastic and compostable polymer film; wherein
the first film and the second film are thermally bonded.

2. The multilayer film according to claim 1, wherein the first film comprises regenerated cellulose.

3. The multilayer film according to a claim 1 or 2, wherein the second film comprises one or more selected from the group consisting of:
- polybutylene adipate terephthalate, PBAT;
- polylactic acid, PLA;
- a polyhydroxyalkanoate-type polymer;
- polyhydroxybutyrate, PHB;
- poly(3-hydroxybutyrate-co-3-hydroxyvalerate), PHBV; and
- polybutylene succinate, PBS.

4. The multilayer film according to any one of the preceding claims, wherein the first film comprises an optional first coating being a metal coating, and a second coating, the second coating being a barrier layer comprising polyvinyl alcohol, PVA, a silicone-based polymer, particularly polysiloxane, and an inorganic glass or ceramic.

5. The multilayer film according to any one of the preceding claims, further comprising a third film being a thermoplastic and compostable polymer film, wherein
the first film and the third film are thermally bonded on a side of the first film opposite the second film.

6. The multilayer film according to any one of the preceding claims, further comprising a fourth film being a cellulose-based and/or paper-based film, wherein
the fourth film is thermally bonded to the first film or the third film on a side opposite the second film.

7. The multilayer film according to any one of the preceding claims, wherein
the cellulose-based film has a thickness in a range between 10 µm and 30 µm, and/or wherein
the thermoplastic and compostable polymer film has a thickness in a range between 15 µm and 50 µm.

8. Method of fabricating a multilayer film according to any one of the preceding claims, comprising:
providing a first film, the first film being a cellulose-based film;
providing a second film, the second film being a thermoplastic and compostable polymer film;
heating a surface of the first film and/or the second film past a glass transition temperature and/or melting point of the film;
joining the first film and the second film, comprising pressing the first film against the second film.

9. The method according to claim 8, wherein the heating comprises contacting the first film and/or the second film with a heated roller, and wherein
the joining comprises feeding the first film and the second film through a set of calender rolls to apply pressure and/or heat.

10. The method according to claim 8 or 9, wherein the cellulose-based film comprises a first coating on a first surface and/or a second coating on a second surface opposite the first surface, the first coating comprising aluminum, and the second coating comprising at least one selected from the group consisting of:
- polylactic acid, PLA;
- polyvinylidene chloride, PVDC;
- polyvinyl alcohol, PVA;
- a silicone-based polymer, particularly polysiloxane;
- an inorganic glass or ceramic.

11. The method according to any one of claims 8 to 10, whereinthe thermoplastic and compostable polymer film is a monofilm comprising a polyhydroxyalkanoate-type polymer.

12. The method according to any one of claims 8 to 11, wherein
the thermoplastic and compostable polymer film is a coextruded film comprising:
an inner layer comprising polybutylene adipate terephthalate, PBAT, or a polyhydroxyalkanoate-type polymer; and
at least one outer layer in contact with the central layer, the outer layer comprising PBS and PLA in a ratio of between 1:1 to 6:1.

13. Use of the multilayer film according to any one of claims 1 to 8 in a packaging product, the use comprising:
forming a container from the multilayer film so that the second film faces the inside of the container;
filling the container with a good; and
sealing the container.

14. The use according to claim 13, wherein the container is a sachet, packet, bag and/or pouch, and particularly wherein the container is suitable as a single-use item.

15. The use according to claim 13 or 14, wherein the good is a consumer good, particularly a foodstuff, a personal care product, and/or a cosmetic product, the good comprising water at a quantity of at least 10% w/v.
